# FASCICULE DE BREVET EUROPEEN

(11) **EP 0 744 623 B1**
(45) Date de publication et mention de la délivrance du brevet: **25.07.2001**
(21) Numéro de dépôt: 96410055.6
(22) Date de dépôt: 21.05.1996
(51) Int. Cl.: G01P 15/13

(54) **Accéléromètre électromagnétique**
Elektromagnetischer Beschleunigungsmesser
Electromagnetic accelerometer

(30) Priorité: 24.05.1995 FR 9506403
(43) Date de publication de la demande: 27.11.1996
(73) Titulaire: SEXTANT AVIONIQUE, 78141 Velizy Villacoublay (FR)
(72) Inventeur: Giroud, Pierre, 26500 Bourg les Valence (FR); Guillemin, Pierre, 26120 Chabeuil (FR); Pedraza-Ramos, Sylvie, 26000 Valence (FR); Migeon, André, 26120 Barcelone (FR)
(74) Mandataire: de Beaumont, Michel

(56) Documents cités:
- EP-A- 0 157 663
- WO-A-92/22821
- DE-A- 4 022 464
- US-A- 4 930 043
- US-A- 4 987 781
- US-A- 5 006 487
- US-A- 5 092 173

## Description

La présente invention concerne un accéléromètre électromagnétique comportant une masse mobile et des jauges piézoélectriques de détection du déplacement de cette masse et de commande d'un système d'asservissement de la position de cette masse en utilisant des phénomènes d'induction électromagnétique. Elle s'applique plus particulièrement à une réalisation miniaturisée d'un tel accéléromètre à partir de plaques de silicium en utilisant des technologies dérivées de celles développées dans le cadre de la fabrication de circuits intégrés.

Les jauges de contraintes d'un accéléromètre sont destinées à générer, au moyen d'un circuit électronique, un courant d'alimentation d'une bobine pour compenser, par des phénomènes d'induction électromagnétique, un déplacement de la masse mobile sous l'effet de conditions extérieures, par exemple de mouvements sismiques. La valeur du déplacement qu'aurait subie la masse mobile 1, en l'absence de cette compensation, est déduite de la valeur du courant d'alimentation de la bobine qui est nécessaire pour empêcher le déplacement de la masse mobile.

Le document WO-A-92/22821 décrit un accéléromètre électromagnétique comportant une masse mobile supportée par un bras unique et portant une bobine cylindrique située dans l'entrefer d'un circuit magnétique, la mesure du déplacement de la masse mobile étant capacitive.

Le document DE-A-40 22 464 décrit un capteur de déplacement, réalisé à partir d'une plaque de silicium et dans lequel une masse mobile est suspendue à un cadre périphérique par des bras portant des jauges de contrainte.

La présente invention vise plus particulièrement à réaliser un accéléromètre électromagnétique présentant un rapport signal/bruit intrinsèque très élevé (supérieur à 140 dB), tout en pouvant supporter, sans défaillance, des chocs importants (par exemple, de l'ordre de 2000 g).

L'invention vise également à réaliser un tel accéléromètre qui soit sensible aux basses fréquences, par exemple du continu à 300 Hz.

L'invention vise également à réaliser un accéléromètre électromagnétique qui présente une réponse en courant qui est linéaire par rapport à l'accélération subie par sa masse mobile.

Pour atteindre ces objets, la présente invention prévoit un accéléromètre électromagnétique comportant une masse mobile suspendue à un cadre périphérique et associée à des jauges de contraintes constituant des détecteurs de déplacement de la masse mobile qui porte une bobine, et un aimant permanent associé à un circuit magnétique constitué de deux pièces polaires définissant deux entrefers de canalisation du champ magnétique de l'aimant, ladite masse mobile comportant un évidement central d'une surface au moins égale à la surface d'une extrémité libre d'une première pièce polaire du circuit magnétique et définissant un rebord de réception de ladite bobine, l'extrémité libre dudit rebord arrivant à l'intérieur des entrefers. La masse mobile est formée d'un empilement d'au moins deux plaques d'un matériau non magnétique, une première plaque définissant une première partie de la masse mobile qui comporte, depuis une première face, ledit évidement de définition du rebord supportant la bobine, et qui est liée, par deux bras de suspension supérieurs alignés, à une première partie dudit cadre périphérique, une deuxième plaque définissant une deuxième partie de la masse mobile liée, par deux bras de suspension inférieurs alignés et supportant lesdites jauges de contraintes, à une deuxième partie dudit cadre périphérique, l'alignement desdits bras supérieurs étant perpendiculaires à l'alignement desdits bras inférieurs.

Selon un mode de réalisation de la présente invention, une face supérieure dudit cadre périphérique comporte des pattes de fixation à un épaulement ménagé dans ladite première pièce polaire, lesdites pattes de fixation constituant, par leur face dirigée vers la masse mobile, des moyens de limitation des déplacements de la masse mobile en direction de l'aimant.

Selon un mode de réalisation de la présente invention, une seconde pièce polaire forme, outre une extrémité de chaque entrefer, un arceau extérieur de suspension de l'accéléromètre à un boîtier, le cadre étant dépourvu de tout contact direct avec ledit boîtier.

Selon un mode de réalisation de la présente invention, lesdites pattes de fixation sont formées dans une troisième plaque d'un matériau non magnétique, rapportée sur la première face de ladite première plaque constitutive de la masse mobile.

Selon un mode de réalisation de la présente invention, une quatrième plaque d'un matériau non magnétique est rapportée sur la face libre de ladite deuxième plaque constitutive de la masse mobile, ladite quatrième plaque comportant, à l'aplomb de ladite deuxième partie de la masse mobile et de ses bras de suspension, un évidement central dont la profondeur définit la plage de déplacement de la masse mobile dans une direction opposée à l'aimant.

Selon un mode de réalisation de la présente invention, une cinquième plaque d'un matériau non magnétique est intercalée entre lesdites première et deuxième plaques, ladite cinquième plaque comportant une zone centrale qui définit une troisième partie de la masse mobile et qui est liée, par des bras de suspension répartis sur tous les côtés de la masse mobile, au cadre périphérique.

Selon un mode de réalisation de la présente invention, lesdites plaques en matériau non magnétique sont des plaques de silicium.

Selon un mode de réalisation de la présente invention, le centre d'inertie de ladite masse mobile se trouve dans un plan intercalé entre un plan contenant lesdits bras de suspension supérieurs et un plan contenant lesdits bras de suspension inférieurs.

La présente invention prévoit également un procédé de réalisation d'une masse mobile d'un accéléromètre électromagnétique du type comportant des jauges de contraintes constituant des détecteurs de déplacement de la masse mobile destinés à asservir un courant d'alimentation d'une bobine portée par la masse mobile, comprenant les étapes suivantes :
- former, en périphérie d'une zone centrale d'une première face oxydée d'une première plaque de silicium, un enroulement plan de pistes conductrices destiné à constituer ladite bobine ;
- revêtir ladite bobine d'une couche d'isolement et rapporter deux pistes de raccordement électrique de la bobine depuis la périphérie de ladite première face, lesdites pistes de raccordement étant alignées ;
- réaliser, à l'aplomb du coeur de la bobine, un évidement depuis ladite première face, et former par gravure, depuis une deuxième face de ladite première plaque, une ouverture traversante autour de ladite bobine en laissant subsister deux bras de suspension de la zone centrale ainsi définie à un cadre périphérique ;
- former, dans une première face d'une deuxième plaque de silicium, deux groupes de deux jauges de contraintes piézo-résistives toutes alignées ;
- revêtir lesdites jauges d'une couche d'isolement et rapporter quatre pistes de raccordement électrique desdites jauges depuis la périphérie de ladite première face de la deuxième plaque, lesdites pistes de raccordement étant dans l'alignement desdites jauges ;
- réaliser, depuis une deuxième face de la deuxième plaque, une ouverture traversante de définition d'une zone centrale en laissant subsister, à l'aplomb de chaque groupe de jauges, un bras de suspension de cette zone centrale à un cadre périphérique ; et
- assembler les deux plaques en rapportant la deuxième face de la première plaque sur la deuxième face de la deuxième plaque, les zones centrales des deux plaques réunies formant ladite masse mobile suspendue à un cadre périphérique et les bras de suspension de la première plaque étant perpendiculaires aux bras de suspension de la deuxième plaque.

Selon un mode de mise en oeuvre de la présente invention, le procédé consiste à laisser subsister, lors de la formation des ouvertures traversantes de chacune desdites plaques, des bras de maintien provisoire des zones centrales destinés à soulager lesdits bras de suspension pendant les étapes ultérieures de fabrication et d'assemblage, lesdits bras provisoires étant éliminés après assemblage de l'accéléromètre.

Ces objets, caractéristiques et avantages, ainsi que d'autres de la présente invention seront exposés en détail dans la description suivante de modes de réalisation et de mise en oeuvre particuliers faite à titre non limitatif en relation avec les figures jointes parmi lesquelles :
la figure 1 est un schéma de principe d'un mode de réalisation d'un accéléromètre du type de celui auquel se rapporte l'invention ;
les figures 2A à 2C sont des vues, respectivement en coupes transversales et de dessus, d'un mode de réalisation d'un accéléromètre électromagnétique selon l'invention ;
la figure 3 représente, vue de dessus, une première plaque constitutive d'une masse mobile d'un accéléromètre tel que représenté aux figures 2A à 2C ;
la figure 4 représente, vue de dessous, une deuxième plaque constitutive d'une masse mobile d'un accéléromètre tel que représenté aux figures 2A à 2C ;
la figure 5 représente, vue de dessous, une troisième plaque constituant des moyens d'accrochage d'une masse mobile à un circuit magnétique d'un accéléromètre tel que représenté aux figures 2A à 2C ;
la figure 6 représente, vue de dessus, une quatrième plaque constituant un fond pour une masse mobile d'un accéléromètre tel que représenté aux figures 2A à 2C ;
les figures 7A à 7E illustrent des étapes d'un mode de mise en oeuvre du procédé selon l'invention de réalisation d'une première plaque d'une masse mobile telle que représentée à la figure 3 ;
les figures 8A à 8E illustrent des étapes d'un mode mise en oeuvre du procédé selon l'invention de réalisation d'une deuxième plaque d'une masse mobile telle que représentée à la figure 4 ;
la figure 9 représente une variante de réalisation d'une masse mobile d'un accéléromètre tel que représenté aux figures 2A à 2C ; et
la figure 10 représente une vue de dessus d'une cinquième plaque constitutive d'une masse mobile telle que représentée à la figure 9.

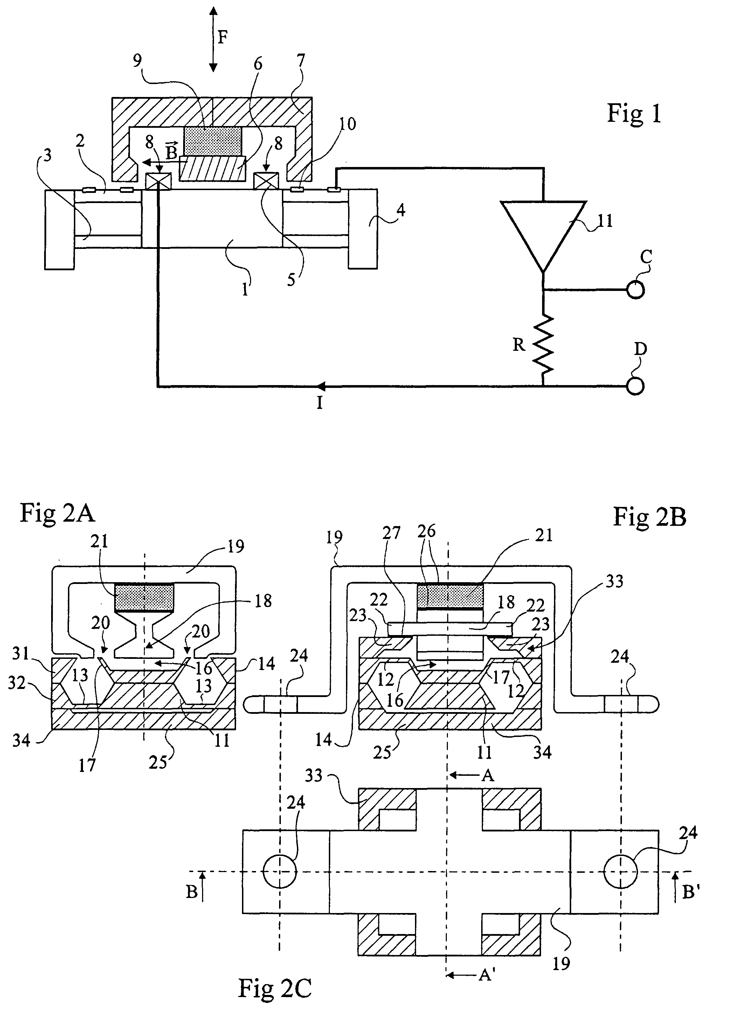

Pour des raisons de clarté, les représentations des figures ne sont pas à l'échelle. De plus, les mêmes éléments ont été désignés par les mêmes références aux figures 2 à 10.

La figure 1 illustre le principe de fonctionnement d'un accéléromètre électromagnétique.

Un tel accéléromètre comporte une masse mobile 1, ou masse sismique, suspendue par des bras 2 et 3 à un cadre fixe 4. La masse mobile 1, ses bras de suspension 2 et 3 et son cadre 4 sont, par exemple, réalisés à partir de plaques de silicium. Une bobine 5 est rapportée sur une face de la masse mobile 1. Cette bobine est associée à un circuit magnétique constitué de deux pièces polaires 6 et 7. Ces pièces polaires définissent deux entrefers 8 de canalisation du champ magnétique d'un aimant permanent 9 dont l'axe d'aimantation est perpendiculaire à la surface de la masse mobile 1. Les entrefers 8 sont situés à l'aplomb de la bobine 5, une première pièce polaire 6 liée à un premier pôle de l'aimant 9 étant à l'aplomb du coeur de la bobine 5. Des bras de suspension, par exemple les bras supérieurs 2, comportent des jauges de contraintes 10 qui constituent des détecteurs de déplacements de la masse mobile.

Les jauges de contraintes 10 sont destinées à générer, au moyen d'un circuit électronique 11, un courant d'alimentation I de la bobine 5 pour compenser, par des phénomènes d'induction électromagnétique, un déplacement de la masse mobile 1 sous l'effet de conditions extérieures, par exemple de mouvements sismiques. La compensation du déplacement de la masse mobile 1 sous l'action des forces d'induction électromagnétique s'effectue selon une direction symbolisée par la double flèche F qui correspond à l'axe d'aimantation de l'aimant 9. La valeur du déplacement qu'aurait subie la masse mobile 1, sous l'effet des conditions extérieures, est déduite de la valeur du courant I nécessaire pour empêcher, au moyen du système d'asservissement, le déplacement de la masse mobile. La valeur du courant I est par exemple extraite au moyen d'une résistance R sous la forme d'une tension entre deux bornes de sortie C et D.

Pour des raisons de clarté, le circuit électronique 11 a été représenté de manière symbolique en indiquant ses liaisons fonctionnelles avec la bobine 5 et une seule jauge de contraintes 10.

Les figures 2A à 2C représentent un mode de réalisation d'un accéléromètre selon l'invention. Les figures 2A et 2B sont des vues en coupes transversales selon des plans perpendiculaires entre eux. La figure 2C est une vue de dessus. Les plans de coupe des figures 2A et 2B sont indiqués à la figure 2C, respectivement par les lignes A-A' et B-B'.

Un accéléromètre selon l'invention comporte une masse mobile 11 suspendue par des bras 12 (figure 2B) et 13 (figure 2A) à un cadre 14. La masse mobile 11 comporte un évidement central 16 qui définit un rebord périphérique 17. Ce rebord 17 est destiné à recevoir, sur sa face supérieure, une bobine (non représentée) constituée d'un enroulement plan de pistes conductrices. L'accéléromètre est, selon ce mode de réalisation, de forme générale carrée de sorte que la bobine est constituée d'un enroulement de tronçons rectilignes.

La bobine est associée à un circuit magnétique constitué de deux pièces polaires 18 et 19. Ces pièces polaires définissent deux entrefers rectilignes 20 (figure 2A) de canalisation du champ magnétique d'un aimant permanent 21 situé à l'aplomb du coeur de la bobine et dont l'axe d'aimantation est perpendiculaire à la surface de la masse mobile 11.

Une première pièce polaire 18, liée à un premier pôle de l'aimant 21, présente une extrémité libre constituant une première extrémité des deux entrefers 20 qui est propre à s'inscrire dans l'évidement 16 de la masse mobile 11. Une deuxième pièce polaire 19 présente, en section transversale et selon le plan de coupe représenté à la figure 2A, approximativement une forme de U dont le fond est lié à un second pôle de l'aimant 21 et dont les extrémités libres définissent une deuxième extrémité des entrefers 20. Ainsi, l'extrémité libre du rebord 17, donc la bobine, arrive dans les entrefers 20.

Une caractéristique de l'invention est que la bobine est placée dans les entrefers 20, donc dans une région du champ magnétique où son courant d'alimentation est perpendiculaire aux lignes de champ. Ainsi, la caractéristique du courant d'alimentation de la bobine est linéaire en fonction des contraintes de déplacement imprimées à la masse mobile 11 par des conditions extérieures.

Les bras de suspension 12 et 13 de la masse mobile 11 sont constitués de deux bras supérieurs 12 (figure 2B) reliant deux côtés opposés du rebord 17 au cadre 14, parallèlement aux entrefers 20. Deux bras inférieurs 13 (figure 2A) perpendiculaires aux bras supérieurs 12 suspendent, par deux côtés opposés, l'extrémité inférieure de la masse mobile 11 au cadre 14. Ces bras 13 sont pourvus de jauges de contraintes (non représentées).

La première pièce polaire 18 comporte, dans un plan parallèle à la surface de la masse mobile 11, deux épaulements 22 (figure 2B) perpendiculaires aux entrefers 20. Ces épaulements 22 sont destinés à former des surfaces de réception de pattes 23 de fixation du cadre 14.

La deuxième pièce polaire 19 forme, dans un plan transversal perpendiculaire aux entrefers 20 et comme le montre la figure 2B, un organe de suspension de l'accéléromètre à un boîtier (non représenté). La deuxième pièce polaire 19 est, par exemple, constituée d'une tôle magnétique pliée, pour définir les extrémités des entrefers 20 et, dans un plan perpendiculaire aux entrefers 20, un arceau de suspension de l'accéléromètre. L'arceau est, par exemple, pourvu de perçages 24 à ses extrémités pour être fixé par vissage, par exemple sur une plaque de circuit imprimé (non représentée) comprenant un circuit électronique (non représenté) du type de celui décrit en relation avec la figure 1.

Une autre caractéristique de l'invention est que l'accéléromètre est supporté par le circuit magnétique. Cela protège la masse mobile 11 et en particulier ses bras de suspension 12 et 13, notamment lors de l'assemblage de l'accéléromètre sur le circuit imprimé. En effet, la masse mobile 11 est particulièrement sensible aux chocs. En supprimant tout risque de contact direct entre son cadre 14 et le circuit imprimé, on évite qu'elle soit endommagée, notamment par rupture de ses bras de suspension 2 et 3, par exemple lors du montage de l'accéléromètre ou lors de son transport.

L'assemblage du circuit magnétique est, par exemple, effectué en rapportant une couche de colle 26 entre chaque pôle de l'aimant 21 et la pièce polaire 18 ou 19 à laquelle ce pôle est associé. La fixation du cadre 14 au circuit magnétique est, par exemple, réalisée par collage 27 des pattes 23 sur l'épaulement 22.

Pour optimiser la protection de la masse mobile 11 et de ses bras de suspension 12 et 13, les déplacements de la masse mobile sont limités par les faces inférieures des pattes de fixation 23 et par une butée constituée d'un fond 25 rapporté sur la face libre du cadre 14. Ainsi, les bras de suspensions 12 et 13 ne risquent pas de subir des contraintes trop importantes lorsque l'accéléromètre est au repos, c'est-à-dire lorsque les déplacements de la masse mobile 11 ne sont pas compensés par l'asservissement. Le cas échéant, la plaque de circuit imprimé sur laquelle est rapporté l'accéléromètre est ajourée à l'aplomb du fond 25. Ainsi, la masse mobile 11 n'est pas en contact, même indirect, avec la plaque de circuit imprimé, autrement que par l'arceau de suspension.

La masse mobile 11, le cadre 14, les pattes 23 et le fond 25 sont réalisés à partir de plaques en un matériau non magnétique, par exemple en silicium, en utilisant des technologies dérivées de celles développées dans le cadre de la fabrication de circuits intégrés. L'emploi de telles technologies permet de réaliser la masse mobile et les éléments qui y sont associés par un processus collectif sur des tranches de silicium. Les tranches sont assemblées après formation de tous les constituants associés aux masses mobiles qu'ils définissent puis découpées pour individualiser les masses mobiles et leur cadre.

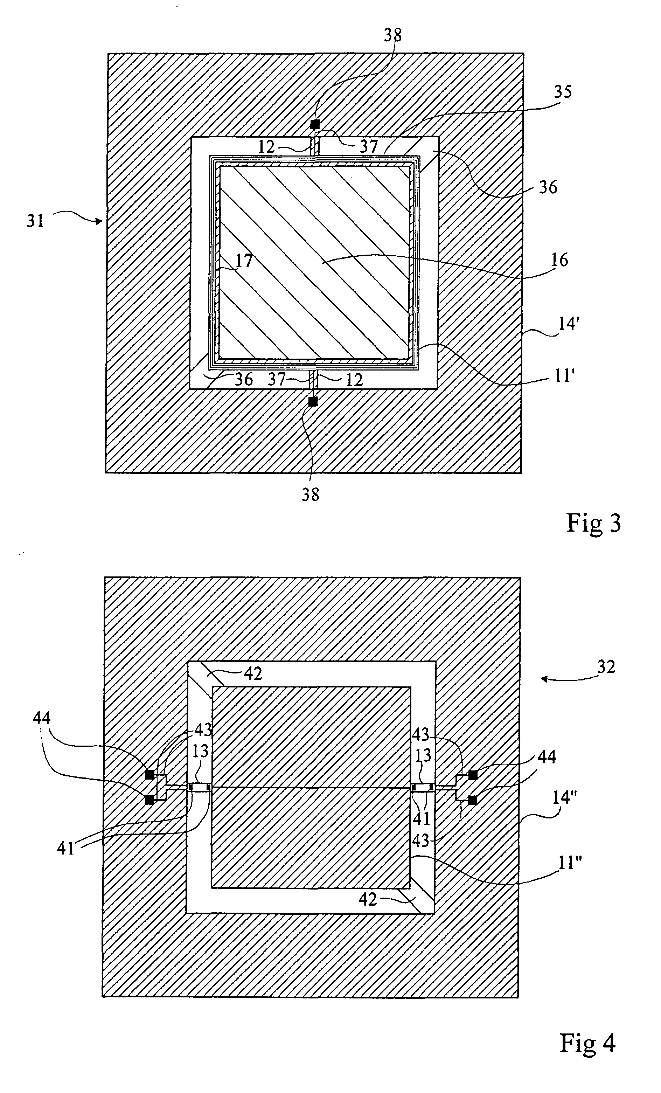

Une première plaque 31 définit une première partie de la masse mobile 11 comportant l'évidement 16, les bras supérieurs 12, et recevant la bobine. Une deuxième plaque 32 définit une deuxième partie de la masse mobile 11 et les bras inférieurs 13 recevant les jauges de contraintes. Une troisième plaque 33 (figure 2B) définit les pattes de fixation 23 du cadre 14 aux épaulements 22 de la première pièce polaire 18. Une quatrième plaque 34 définit le fond 25. Ces quatre plaques sont représentées, individuellement et en élévation, aux figures 3 à 6. Les différents plans selon lesquels sont gravées les plaques de silicium sont symbolisés par des hachures différentes.

La figure 3 est une vue de dessus de la première plaque 31 constitutive de la première partie de la masse mobile 11.

La plaque 31 forme un cadre 14' autour d'une partie centrale 11' constitutive de la masse mobile. Cette partie centrale 11' comporte l'évidement 16 qui définit le rebord 17 sur l'extrémité duquel est déposée la bobine 35 par un enroulement plan de pistes conductrices. La partie centrale 11' est suspendue au cadre 14' par les bras 12. Deux bras 36 relient également la partie 11' au cadre 14', de préférence dans deux coins opposés. Ces bras 36 sont destinés à maintenir provisoirement la partie 11' tant que l'accéléromètre n'est pas assemblé afin de soulager les bras de suspension 12 pendant la fabrication. Les bras 36 sont découpés, par exemple au moyen d'un laser, une fois que l'accéléromètre est assemblé. Des pistes conductrices 37 de raccordement de la bobine 35 sont déposées sur les bras 12 pour relier la bobine à des bornes 38 de raccordement au circuit électronique.

La figure 4 est une vue de dessous de la deuxième plaque 32 constitutive de la masse mobile.

La plaque 32 forme un cadre 14" autour d'une partie centrale 11" constitutive de la masse mobile. La partie centrale 11" est suspendue au cadre 14" par les bras 13 sur lesquels sont rapportées les jauges de contraintes 41. Deux bras 42 relient également la partie 11" au cadre 14", de préférence dans deux coins opposés. Ces bras 42 sont, comme les bras 36 de la plaque 31, destinés à maintenir provisoirement la partie 11" afin de soulager les bras de suspension 13 pendant la fabrication. Les bras 36 sont également découpés, par exemple au moyen d'un laser, une fois que l'accéléromètre est assemblé. Des pistes conductrices 43 de raccordement des jauges de contraintes 41 sont déposées sur les bras 12 pour relier ces jauges à des bornes 44 de raccordement au circuit électronique.

Un avantage de la présente invention est qu'en séparant la fabrication de la plaque 31 portant la bobine 35 de la plaque 32 portant les jauges de contraintes 41, on simplifie cette fabrication, notamment pour ce qui concerne la réalisation des pistes conductrices.

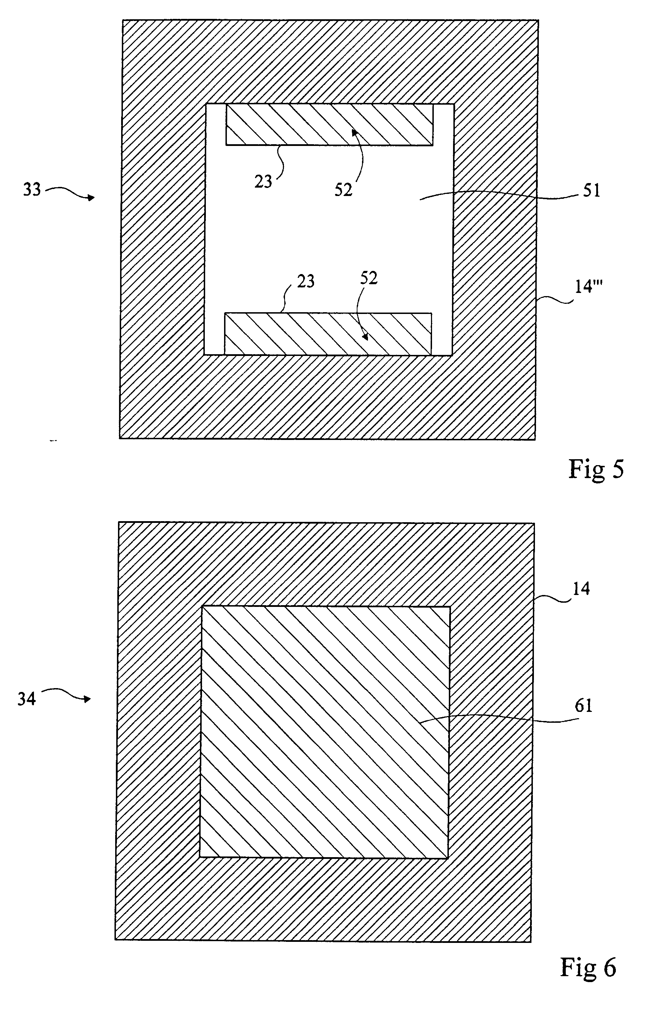

La figure 5 est une vue de dessous de la troisième plaque 33 dans laquelle sont formées les pattes de fixation 23.

La plaque 33 forme un cadre 14"' autour d'une ouverture centrale 51 destinée à permettre le passage de l'extrémité libre de la première pièce polaire 18. Les deux pattes de fixation 23 sont formées, en saillie de la périphérie interne du cadre 14"', à partir de deux côtés opposés du cadre. Les pattes 23 définissent, depuis la face inférieure de la plaque 33, un épaulement 52 constituant une butée pour les déplacements de la masse mobile. Les faces supérieures des pattes de fixation 23 constituent des surfaces permettant de fixer, par exemple par collage, le cadre 14 dans les épaulements 22 de la première pièce polaire 18.

La figure 6 est une vue de dessus de la quatrième plaque 34 formant le fond 25.

La plaque 34 comporte un évidement central 61 d'une surface au moins égale à la surface dans laquelle s'inscrivent la deuxième partie 11" et ses bras de suspension 13 dans la plaque 32. Cet évidement 61 est destiné à définir une butée pour les déplacements de la masse mobile 11. La profondeur de l'évidement 61, ajoutée à la profondeur de l'épaulement 52 de la plaque 33, définit la plage de déplacement de la masse mobile 11.

Une caractéristique de l'invention est de réaliser des bras de suspension 12 et 13 de faible longueur pour augmenter leur rigidité. Cela présente l'avantage d'augmenter le gain de la boucle d'asservissement ce qui diminue l'influence du bruit sur les résultats des mesures.

A titre d'exemple particulier de réalisation, l'aimant 21 est un hexaèdre régulier en samarium-cobalt dont les arêtes présentent une longueur d'environ 1,6 mm. Les entrefers 20 présentent une largeur de l'ordre de 0,8 mm et une hauteur d'environ 0,4 mm. Le cadre 14 présente des côtés d'environ 8 mm de long et une largeur de l'ordre de 2,5 mm. Les bras de suspension 12 et 13 présentent une longueur d'environ 0,5 mm de sorte que la masse mobile s'inscrit dans une surface carrée d'environ 5 mm de côté. Les bras 12 et 13 présentent une épaisseur de l'ordre de 6 µm et une largeur d'environ 50 µm. La hauteur de la masse mobile est d'environ 2 mm et sa masse est de l'ordre de 100 milligrammes. La bobine 35 comporte quinze spires. La longueur utile des tronçons rectilignes de la bobine 35 est de l'ordre de 3,5 mm de façon à laisser une marge pour optimiser la définition de l'accéléromètre et les dimensions du circuit magnétique. On obtient ainsi un accéléromètre dans lequel la rigidité des bras de suspension de la masse mobile est élevée (de l'ordre de 80 N/m).

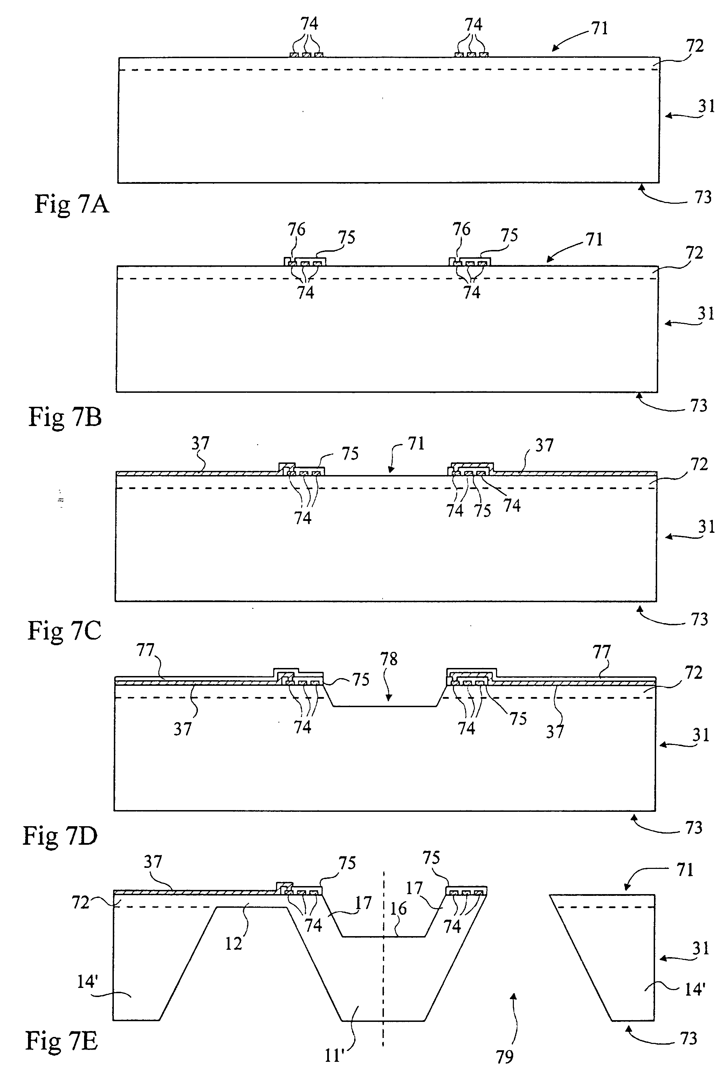

Les figures 7A à 7E illustrent des étapes d'un mode de mise en oeuvre d'un procédé de réalisation de la première plaque de la masse mobile selon l'invention. Ces figures représentent des coupes transversales partielles d'une première plaque de silicium 31.

Il s'agit par exemple d'une plaque dopée P comportant sur une première face 71 (figure 7A), une couche épitaxiale dopée N 72, les deux faces 71 et 73 de la plaque étant de préférence oxydées.

On forme par électroformage sur la première face 71, au moyen d'une fine couche d'accrochage (non représentée), par exemple de chrome ou d'or, déposée par photolithogravure, la bobine 35 constituée d'un enroulement plan de tronçons rectilignes 74. Le matériau déposé par électroformage est, par exemple, du cuivre, de l'or, ou tout autre matériau conducteur.

On dépose ensuite pleine plaque, une couche d'isolement 75 (figure 7B), par exemple de nitrure de silicium, qui fait l'objet d'une photolithogravure selon le motif dans lequel s'inscrit la bobine 35. Deux ouvertures 76 sont pratiquées à l'aplomb de deux tronçons 74 constituant les extrémités de la bobine.

Une couche conductrice, par exemple de chrome/or, est alors déposée puis gravée pour former les deux pistes 37 (figure 7C) de raccordement électrique de la bobine. Ces deux pistes 37 sont alignées, au moins dans la zone où elles sont destinées à reposer sur les bras de suspension 12 qui seront formés par la suite.

La première face 71 est revêtue d'une couche provisoire 77 (figure 7D), par exemple de nitrure, de protection des pistes 37 puis est gravée à l'aplomb du coeur de la bobine pour former une ébauche 78 de l'évidement 16 en traversant la couche 72.

On réalise ensuite des photolithogravures successives, depuis les deux faces 71 et 73 de la plaque 31, pour former une ouverture traversante 79 (figure 7E) autour de la bobine 35 en laissant subsister, à l'aplomb des pistes 37, deux bras de suspension 12 constitués de la couche épitaxiale dopée N oxydée. On laisse également subsister, dans deux coins opposés de l'ouverture 79, les deux bras 36 de maintien provisoire de la zone centrale 11' ainsi obtenue. Enfin, la couche provisoire 77 est totalement éliminée.

La partie droite de la figure 7E est une coupe selon un plan perpendiculaire au plan de coupe des figures 7A à 7D et de la partie gauche de la figure 7E. Les bras 36 n'apparaissent pas sur la figure 7E en raison des plans de coupe.

Les gravures réalisées dans le silicium sont, de préférence, des gravures chimiques. L'angle d'attaque de ces gravures provient de la structure cristalline du silicium et présente un angle de 54,74 degrés entre le plan de la plaque d'orientation (100) et le plan (111).

A titre d'exemple particulier de réalisation, la plaque 31 présente une épaisseur de l'ordre de 0,8 mm et l'épaisseur de la couche épitaxiale dopée N, définissant l'épaisseur des bras 12, est d'environ 6 µm. Les tronçons 74 de la bobine présentent une épaisseur de l'ordre de 3 µm, une largeur d'environ 5 µm et un pas de l'ordre de 10 µm. La largeur du rebord 17, entre l'ouverture 79 et l'évidement 16, est d'environ 0,2 mm.

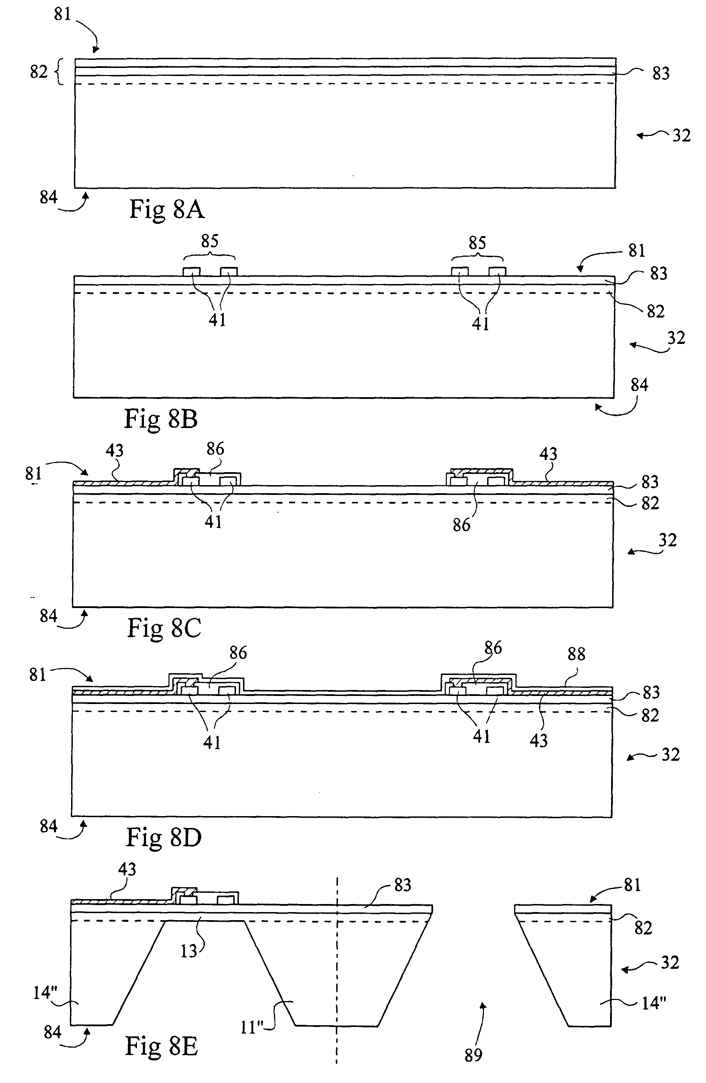

Les figures 8A à 8E illustrent des étapes d'un mode de mise en oeuvre d'un procédé de réalisation de la deuxième plaque de la masse mobile selon l'invention. Ces figures représentent des coupes transversales partielles d'une deuxième plaque de silicium 32.

Il s'agit par exemple, comme pour la première plaque, d'une plaque dopée P comportant, sur une première face 81 (figure 8A), une couche épitaxiale dopée N 82. La couche 82 enferme une couche d'oxyde 83 obtenue par implantation et la deuxième face 84 est revêtue d'une couche de nitrure (non représentée).

On forme, par photolithogravure de la première face 81 jusqu'à la couche d'oxyde 83, les jauges de contraintes 41 (figure 8B). Ces jauges piézo-résistives au nombre de quatre sont alignées en étant appariées. Deux groupes 85 de deux jauges 41 alignés sont ainsi formés, à l'aplomb des futurs bras de suspension 13.

On dépose ensuite pleine plaque, une couche d'isolement 86 (figure 8C), par exemple de nitrure de silicium. Des ouvertures 87 sont pratiquées à l'aplomb de chaque jauge 41 et une couche conductrice, par exemple en aluminium, est alors déposée puis gravée pour former des pistes 43 de raccordement électrique de chaque jauge 41. Les pistes 43 associées à un groupe 85 de jauges 41 sont alignées, au moins dans la zone où elles sont destinées à reposer sur les bras de suspension 13 qui seront formés par la suite.

La première face 81 est revêtue d'une couche provisoire 88 (figure 8D), par exemple de nitrure, de protection des pistes 43.

On réalise ensuite par photolithogravure, depuis la deuxième face 84 de la plaque 32, une ouverture traversante 89 (figure 7E) pour former la deuxième partie 11" de la masse mobile en laissant subsister, à l'aplomb des groupes 85 de jauges 41, deux bras de suspension 13 constitués de la couche épitaxiale dopée N oxydée. On laisse également subsister, dans deux coins opposés de l'ouverture 89, les bras 44 de maintien provisoire de la zone centrale 11". La couche 88 est enfin totalement éliminée de la première face 81.

La partie droite de la figure 8E est une coupe selon un plan perpendiculaire au plan de coupe des figures 8A à 8D et de la partie gauche de la figure 8E. Les bras 44 n'apparaissent pas sur la figure 8E en raison des plans de coupe.

Les gravures réalisées dans le silicium sont, là encore, de préférence des gravures chimiques dont l'attaque présente un angle de 54,74 degrés entre le plan de la plaque d'orientation (100) et le plan (111).

A titre d'exemple particulier de réalisation, la plaque 32 présente une épaisseur de l'ordre de 0,8 mm et l'épaisseur de la couche épitaxiale dopée N est d'environ 6 µm. La couche libre de silicium dopée N, après implantation de l'oxyde, présente une épaisseur de l'ordre de 0,5 µm qui correspond à l'épaisseur des jauges 41. La longueur des jauges 41 est d'environ 0,1 mm sur des bras 13 d'environ 0,5 mm de long, 50 µm de large et 6 µm d'épaisseur.

Les deux plaques 31 et 32 sont assemblées, par exemple par collage, en rapportant la deuxième face 72 de la première plaque 31 sur la deuxième face 82 de la deuxième plaque 32 et en plaçant les bras de suspension 12 perpendiculairement aux bras de suspension 13.

Les angles d'attaque des gravures ayant conduit à la réalisation des ouvertures traversantes 79 et 89 conduisent à une forme "en sablier" de la masse mobile 11.

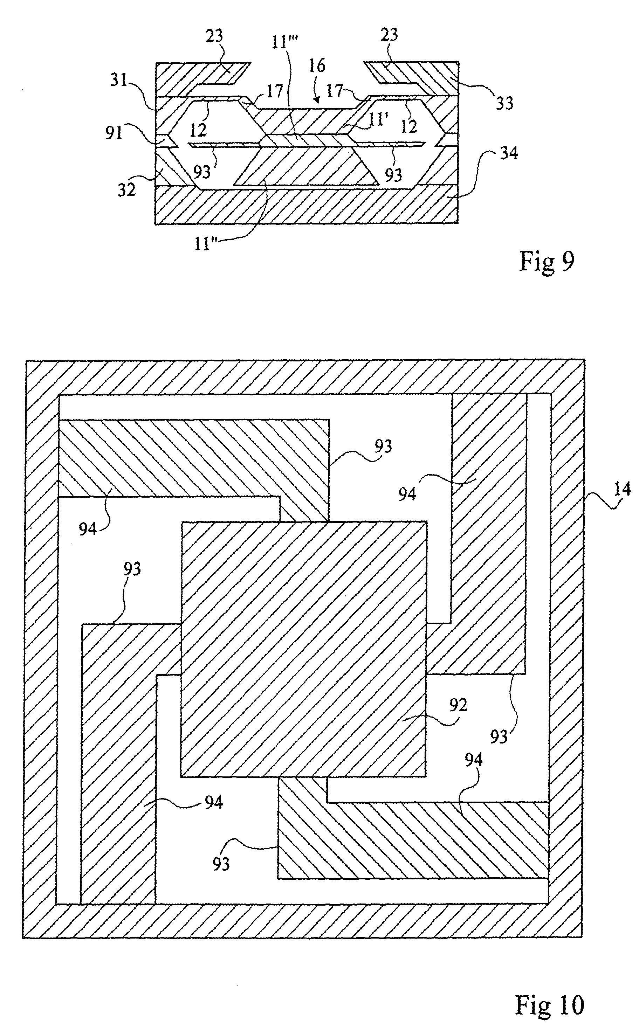

Les figures 9 et 10 représentent, respectivement en coupe transversale et en vue de dessus, une variante de réalisation d'une masse mobile selon l'invention. Le plan de coupe de la figure 9 correspond au plan de coupe de la figure 2B.

Selon cette variante, une cinquième plaque de silicium 91 est intercalée entre les première 31 et deuxième 32 plaques constituant la masse mobile 11. Cette cinquième plaque 91 comporte une zone centrale 92 (figure 10) constitutive d'une troisième partie 11"' de la masse mobile 11. La zone centrale 92 est reliée au cadre 14 au moyen de bras de suspension 93 présents, de préférence et comme l'illustre la figure 10, sur tous les côtés de la masse mobile.

Un avantage de cette variante est qu'elle permet d'augmenter la masse mobile 11 tout en utilisant des tranches de silicium d'épaisseur standard (par exemple de 0,8 mm).

Un autre avantage de cette variante est qu'elle permet de faire coïncider le centre de gravité de la masse mobile 11 avec son centre géométrique afin de limiter la torsion des bras supportant les jauges de contraintes. Le centre d'inertie de la masse mobile 11 se trouve ainsi dans un plan intercalé entre le plan contenant les bras de suspension supérieurs 12 et le plan contenant les bras de suspension inférieurs 13.

Un autre avantage est qu'en profitant des angles d'attaque des gravures réalisées dans les plaques 31 et 32, la distance qui sépare la masse mobile 11 du cadre 14, au niveau des bras de suspension 93, est plus importante que celle qui sépare la masse mobile du cadre, au niveau des bras 12 de la plaque 31 ou des bras de la plaque 32 supportant les jauges de contraintes. Cette distance importante permet de réaliser des bras 93 qui, par leur forme présentant un tronçon 94 parallèle au côté de la masse mobile auquel ils sont respectivement associés, limitent les mouvements de la masse mobile sous l'effet de chocs latéraux sans gêner les déplacements verticaux de la masse mobile 11. Ainsi, les bras 93 remplissent une fonction distincte des bras 12 et 13 et ne troublent pas les mesures effectuées par les jauges de contraintes 41. Les bras 13 de la plaque 32 n'apparaissent pas sur la figure 9 en raison du plan de coupe.

Bien entendu, la présente invention est susceptible de diverses variantes et modifications qui apparaîtront à l'homme de l'art. En particulier, chacun des éléments décrits pourra être remplacé par un ou plusieurs éléments remplissant la même fonction.

De plus, bien que la description qui précède ait été faite en relation avec un accéléromètre de forme générale carrée, l'invention s'applique également à la réalisation d'accéléromètres de forme générale rectangulaire ou polygonale.

En outre, les matériaux constitutifs des couches déposées sur les plaques 31 et 32 pourront être remplacés par un ou plusieurs matériaux remplissant la même fonction et les moyens de dépôt et de gravure utilisés pourront être remplacés par d'autres moyens conduisant au même résultat fonctionnel.

## Revendications

1. Accéléromètre électromagnétique comportant une masse mobile (11) suspendue à un cadre périphérique (14) et associée à des jauges de contraintes (41) constituant des détecteurs de déplacement de la masse mobile qui porte une bobine (35), et un aimant permanent (21) associé à un circuit magnétique constitué de deux pièces polaires (18, 19) définissant deux entrefers (20) de canalisation du champ magnétique de l'aimant (21), dans lequel ladite masse mobile (11) comporte un évidement central (16) d'une surface au moins égale à la surface d'une extrémité libre d'une première pièce polaire (18) du circuit magnétique et définissant un rebord (17) de réception de ladite bobine (35), l'extrémité libre dudit rebord (17) arrivant à l'intérieur des entrefers (20), caractérisé en ce que ladite masse mobile (11) est formée d'un empilement d'au moins deux plaques (31, 32) d'un matériau non magnétique, une première plaque (31) définissant une première partie (11') de la masse mobile qui comporte, depuis une première face (71), ledit évidement (16) de définition du rebord (17) supportant la bobine (35), et qui est liée, par deux bras de suspension supérieurs (12) alignés, à une première partie (14') dudit cadre périphérique (14), une deuxième plaque (32) définissant une deuxième partie (11") de la masse mobile liée, par deux bras de suspension inférieurs (13) alignés et supportant lesdites jauges de contraintes (41), à une deuxième partie (14") dudit cadre périphérique (14), l'alignement desdits bras supérieurs (12) étant perpendiculaires à l'alignement desdits bras inférieurs (13).

2. Accéléromètre électromagnétique selon la revendication 1, caractérisé en ce qu'une face supérieure dudit cadre périphérique (14) comporte des pattes (23) de fixation à un épaulement (22) ménagé dans ladite première pièce polaire (18), lesdites pattes de fixation (23) constituant, par leur face dirigée vers la masse mobile (11), des moyens de limitation des déplacements de la masse mobile en direction de l'aimant (21).

3. Accéléromètre électromagnétique selon la revendication 2, caractérisé en ce qu'une seconde pièce polaire (19) forme, outre une extrémité de chaque entrefer (20), un arceau extérieur de suspension de l'accéléromètre à un boîtier, le cadre (14) étant dépourvu de tout contact direct avec ledit boîtier.

4. Accéléromètre électromagnétique selon la revendication 2 ou 3, caractérisé en ce que lesdites pattes de fixation (23) sont formées dans une troisième plaque (33) d'un matériau non magnétique, rapportée sur la première face (71) de ladite première plaque (31) constitutive de la masse mobile (11).

5. Accéléromètre électromagnétique selon l'une quelconque des revendications 1 à 4, caractérisé en ce qu'une quatrième plaque (34) d'un matériau non magnétique est rapportée sur la face libre (81) de ladite deuxième plaque (32) constitutive de la masse mobile (11), ladite quatrième plaque (34) comportant, à l'aplomb de ladite deuxième partie (11") de la masse mobile et de ses bras de suspension (13), un évidement central (61) dont la profondeur définit la plage de déplacement de la masse mobile (11) dans une direction opposée à l'aimant (21).

6. Accéléromètre électromagnétique selon l'une quelconque des revendications 1 à 5, caractérisé en ce qu'une cinquième plaque (91) d'un matériau non magnétique est intercalée entre lesdites première (31) et deuxième (32) plaques, ladite cinquième plaque (91) comportant une zone centrale (92) qui définit une troisième partie (11"') de la masse mobile et qui est liée, par des bras de suspension (93) répartis sur tous les côtés de la masse mobile, au cadre périphérique (14).

7. Accéléromètre électromagnétique selon l'une quelconque des revendications 1 à 6, caractérisé en ce que lesdites plaques (31, 32, 33, 34, 91) en matériau non magnétique sont des plaques de silicium.

8. Accéléromètre électromagnétique selon l'une quelconque des revendications 1 à 7, caractérisé en ce que le centre d'inertie de ladite masse mobile (11) se trouve dans un plan intercalé entre un plan contenant lesdits bras de suspension supérieurs (12) et un plan contenant lesdits bras de suspension inférieurs (13).

9. Procédé de réalisation d'une masse mobile (11) d'un accéléromètre électromagnétique du type comportant des jauges de contraintes (41) constituant des détecteurs de déplacement de la masse mobile destinés à asservir un courant d'alimentation d'une bobine (35) portée par la masse mobile, caractérisé en ce qu'il comprend les étapes suivantes :
- former, en périphérie d'une zone centrale d'une première face (71) oxydée d'une première plaque de silicium (31), un enroulement plan de pistes conductrices (74) destiné à constituer ladite bobine (35) ;
- revêtir ladite bobine (35) d'une couche d'isolement (75) et rapporter deux pistes (37) de raccordement électrique de la bobine (35) depuis la périphérie de ladite première face (71), lesdites pistes de raccordement (37) étant alignées ;
- réaliser, à l'aplomb du coeur de la bobine (35), un évidement (16) depuis ladite première face (71), et former par gravure, depuis une deuxième face (73) de ladite première plaque (31), une ouverture traversante (79) autour de ladite bobine (35) en laissant subsister deux bras de suspension (12) de la zone centrale (11') ainsi définie à un cadre périphérique (14');
- former, dans une première face (81) d'une deuxième plaque de silicium (32), deux groupes (85) de deux jauges de contraintes piézo-résistives (41) toutes alignées ;
- revêtir lesdites jauges (41) d'une couche d'isolement (86) et rapporter quatre pistes (43) de raccordement électrique desdites jauges (41) depuis la périphérie de ladite première face (81) de la deuxième plaque (32), lesdites pistes de raccordement (43) étant dans l'alignement desdites jauges (41) ;
- réaliser, depuis une deuxième face (84) de la deuxième plaque (32), une ouverture traversante (89) de définition d'une zone centrale (11") en laissant subsister, à l'aplomb de chaque groupe (85) de jauges (41), un bras de suspension (13) de cette zone centrale (11") à un cadre périphérique (14") ; et
- assembler les deux plaques en rapportant la deuxième face (73) de la première plaque (31) sur la deuxième face (84) de la deuxième plaque (32), les zones centrales (11', 11") des deux plaques réunies formant ladite masse mobile (11) suspendue à un cadre périphérique (14) et les bras de suspension (12) de la première plaque (31) étant perpendiculaires aux bras de suspension (13) de la deuxième plaque (32).

10. Procédé de réalisation d'une masse mobile (11) d'un accéléromètre électromagnétique selon la revendication 9, caractérisé en ce qu'il consiste à laisser subsister, lors de la formation des ouvertures traversantes (79, 89) de chacune desdites plaques (31, 32), des bras (36, 42) de maintien provisoire des zones centrales (11', 11") destinés à soulager lesdits bras de suspension (12, 13) pendant les étapes ultérieures de fabrication et d'assemblage, lesdits bras provisoires (36, 42) étant éliminés après assemblage de l'accéléromètre.

## Claims

1. An electromagnetic accelerometer including a moving mass (11) suspended to a peripheral frame (14) and associated with stress gauges (41) forming sensors for detecting the displacement of the moving mass which supports a coil (35), and a permanent magnet (21) associated with a magnetic circuit formed by two pole pieces (18, 19) defining two air-gaps (20) for channeling the magnetic field of the magnet (21), said moving mass (11) including a central recess (16) having a surface at least equal to the surface of a free extremity of a first pole piece (18) of the magnetic circuit and forming a shoulder (17) for receiving said coil (35), the free extremity of said shoulder (17) leading inside the air-gaps (20), characterized in that said moving mass (11) is formed by the superposition of at least two plates (31, 32) of a non-magnetic material, the first plate (31) defining a first portion (11') of the moving mass which includes, from a first surface (71), said recess (16) forming the shoulder (17) supporting the coil (35), and which is coupled, by two aligned upper hanging legs (12), to a first portion (14') of said peripheral frame (14), the second plate (32) defining a second portion (11") of the moving mass coupled, by two aligned lower legs (13) supporting said stress gauges (41), to a second portion (14") of said peripheral frame (14), the alignment of said upper legs (12) being perpendicular to the alignment of said lower legs (13).

2. The accelerometer of claim 1, characterized in that an upper surface of said peripheral frame (14) includes tabs (23) for fastening with a shoulder (22) formed in said first pole piece (18), said fastening tabs (23) forming, by their surface facing the moving mass (11), means for limiting the displacements of the moving mass toward the magnet (21).

3. The accelerometer of claim 2, characterized in that a second pole piece (19) forms, in addition to an extremity of each air-gap (20), an external hanging arch for hanging the accelerometer to a casing, the frame (14) having no direct contact with said casing.

4. The accelerometer of claim 2 or 3, characterized in that said fastening tabs (23) are formed in a third plate (33) made of a non-magnetic material, fastened over the first surface (71) of said first plate (31) forming the moving mass (11).

5. The accelerometer of any of claims 1 to 4, characterized in that a fourth plate (34) made of a non-magnetic material is fastened over the free surface (81) of said second plate (32) forming the moving mass (11), said fourth plate (34) including, vertically with respect to the second portion (11") of the moving mass and of its hanging legs (13), a central recess (61) whose depth defines the displacement range of the moving mass (11) in a direction opposite to the magnet (21).

6. The accelerometer of any of claims 1 to 5, characterized in that a fifth plate (91) made of non-magnetic material is sandwiched between said first (31) and second (32) plates, said fifth plate (91) including a central area (92) which defines a third portion (11"') of the moving mass and which is coupled, by hanging legs (93) distributed on all the sides of the moving mass, to the peripheral frame (14).

7. The accelerometer of any of claims 1 to 6, characterized in that said plates (31, 32, 33, 34, 91) made of a non-magnetic material are silicon plates.

8. The accelerometer of any of claims 1 to 7, characterized in that the center of inertia of said moving mass (11) is within a plane interposed between a plane including said upper hanging legs (12) and a plane including said lower hanging legs (13).

9. A method for fabricating a moving mass (11) of an electromagnetic accelerometer including stress gauges (41) forming sensors for detecting the displacement of the moving mass designed to servocontrol a supply current of a coil (35) supported by the moving mass, characterized in that it includes the following steps:
- forming, at the periphery of a central area of a first oxidized surface (71) of a first silicon plate (31), a plane winding of conductive tracks (74) for forming said coil (35) ;
- coating said coil (35) with an insulating layer (75) and foaming two electric connection tracks (37) of the coil (35) from the periphery of said first surface (71), said connection tracks (37) being aligned;
- forming, vertically to the core of the coil (35), a recess (16) from said first surface (71), and etching, from the second surface (73) of said first plate (31), a hole (79) about said coil (35) while maintaining two hanging legs (12) of the so-defined central area (11') to a peripheral frame (14');
- forming, in a first surface (81) of a second silicon plate (32), two groups (85) of two aligned piezo-resistive stress gauges (41);
- coating said gauges (41) with an insulating layer (86) and forming four electric connection tracks (43) of said gauges (41) from the periphery of said first surface (81) of the second plate (32), said connection tracks (43) being aligned with said gauges (41);
- forming, from the second surface (84) of the second plate (32), a hole (89) for defining a central area (11") while maintaining, vertically to each group (85) of gauges (41), a hanging leg (13) of said central area (11") to a peripheral frame (14"); and
- assembling the two plates by fastening the second surface (73) of the first plate (31) to the second surface (84) of the second plate (32), the central areas (11', 11") of the two assembled plates foaming said moving mass (11) suspended to a peripheral frame (14) and the hanging legs (12) of the first plate (31) being perpendicular with the hanging legs (13) of the second plate (32).

10. The method for fabricating a moving mass (11) of an electromagnetic of claim 9, characterized in that it consists maintaining, when forming the holes (79, 89) of each of said plates (31, 32), legs (36, 42) for temporarily maintaining the central areas (11', 11"), designed to relieve said hanging legs (12, 13) during the subsequent steps of fabrication and assembling, said temporary legs (36, 42) being removed once the accelerometer is assembled.

## Patentansprüche

1. Elektromagnetischer Beschleunigungsmesser mit einer beweglichen Masse (11), die an einem umgebenden Rahmen (14) aufgehängt und Dehnungsmesseinrichtungen (41) zugeordnet ist, die Detektoren für die Verlagerung der beweglichen, eine Spule (35) tragenden Masse bilden, und mit einem Permanentmagneten (21), der einem Magnetkreis zugeordnet ist, welcher aus zwei Polstücken (18, 19) gebildet ist, die zwei Luftspalte (20) zum Leiten des Magnetfeldes des Magneten (21) begrenzen, wobei die bewegliche Masse (11) eine zentrale Ausnehmung (16) mit einer Fläche aufweist, die zumindest gleich der Fläche eines freien Endes eines ersten Polstückes (18) des Magnetkreises ist und die von einer Randleiste (17) zur Aufnahme der Spule (35) begrenzt ist, wobei der freie Rand der Randleiste (17) in das Innere des Luftspaltes (20) ragt, dadurch gekennzeichnet, dass die bewegliche Masse (11) aus einem Stapel aus zumindest zwei Platten (31, 32) aus einem nicht magnetischen Material gebildet ist, wobei eine erste Platte (31) einen ersten Teil (11') der beweglichen Masse bildet und auf einer ersten Seite (71) die Ausnehmung (16) und die begrenzende, die Spule (35) tragende Randleiste (17) aufweist und über zwei gleichgerichtete obere Aufhängearme (12) mit einem ersten Teil (14') des umgebenden Rahmens (14) verbunden ist, wobei eine zweite Platte (32) einen zweiten Teil (11'') der beweglichen Masse bildet und über zwei gleichgerichtete die Dehnungsmesseinrichtungen (41) tragende untere Aufhängearme (13) mit einem zweiten Teil (14'') des umgebenden Rahmens (14) verbunden ist, wobei die Ausrichtung der oberen Arme (12) senkrecht zu der Ausrichtung der unteren Arme (13) ist.

2. Elektromagnetischer Beschleunigungsmesser nach Anspruch 1, dadurch gekennzeichnet, dass eine Oberseite des umgebenden Rahmens (14) Lappen (23) zur Befestigung an einer Schulter (22) trägt, die in dem ersten Polstück (18) ausgespart ist, wobei diese Befestigungslappen (23) durch ihre gegen die bewegliche Masse (11) gerichtete Seite Einrichtungen zur Begrenzung der Verlagerungen der beweglichen Masse in Richtung auf den Magneten (21) sind.

3. Elektromagnetischer Beschleunigungsmesser nach Anspruch 2, dadurch gekennzeichnet, dass ein zweites Polstück (19) jenseits eines Randes jedes Luftspaltes (20) einen externen Bügel zum Aufhängen des Beschleunigungsmessers an einem Gehäuse bildet, wobei der Rahmen (14) in keinem direkten Kontakt mit dem Gehäuse steht.

4. Elektromagnetischer Beschleunigungsmesser nach einem der Ansprüche 2 oder 3, dadurch gekennzeichnet, dass die Befestigungslappen (23) in einer dritten Platte (33) eines nicht magnetischen Materiales gebildet sind, die an der ersten Fläche (71) der ersten Platte (31), welche der beweglichen Masse (11) angehört, anliegt.

5. Elektromagnetischer Beschleunigungsmesser nach einem der Ansprüche 1 bis 4, dadurch gekennzeichnet, dass eine vierte Platte (34) aus einem nicht magnetischen Material auf der freien Fläche (81) der der beweglichen Masse (11) zugehörigen zweiten Platte (32) anliegt, wobei diese vierte Platte (34) lotrecht zu dem zweiten Teil (11'') der beweglichen Masse und seiner Aufhängearme (13) eine zentrale Ausnehmung (61) aufweist, deren Tiefe den Bereich der Verlagerung der beweglichen Masse (11) in einer dem Magneten (21) entgegengerichteten Richtung bestimmt.

6. Elektromagnetischer Beschleunigungsmesser nach einem der Ansprüche 1 bis 5, dadurch gekennzeichnet, dass eine fünfte Platte (91) aus einem nicht magnetischen Material zwischen die erste (31) und die zweite Platte (32) eingeschoben ist, wobei diese fünfte Platte (91) eine zentrale Zone (92) aufweist, die einen dritten Teil (11''') der beweglichen Masse bildet und die über Aufhängearme (93), die auf alle Seiten der beweglichen Masse verteilt sind, mit dem umgebenden Rahmen (14) verbunden ist.

7. Elektromagnetischer Beschleunigungsmesser nach einem der Ansprüche 1 bis 6, dadurch gekennzeichnet, dass die Platten (31, 32, 33, 34, 91) aus nicht magnetischen Material Platten aus Silizium sind.

8. Elektromagnetischer Beschleunigungsmesser nach einem der Ansprüche 1 bis 7, dadurch gekennzeichnet, dass das Trägheitszentrum der beweglichen Masse (11) sich in einer Ebene befindet, die zwischen einer die oberen Aufhängearme (12) enthaltenen Ebene und einer die unteren Aufhängearme (13) enthaltenen Ebene liegt.

9. Verfahren zum Herstellen einer beweglichen Masse (11) eines elektromagnetischen Beschleunigungsmessers der Art, der Dehnungsmesseinrichtungen (41) aufweist, die Detektoren für die Verlagerung der beweglichen Masse bilden, welche einen Versorgungsstrom für eine durch die bewegliche Masse getragene Spule (35) zur Verfügung stellen, dadurch gekennzeichnet, dass es die folgenden Schritte aufweist:
- Bilden am Rand einer zentralen Zone einer ersten oxidierten Seite (71) einer ersten Platte aus Silizium (31) einer ebenen Wicklung aus leitenden Bahnen (74), um die besagte Spule (35) zu bilden;
- Bedecken der Spule (35) mit einer Isolierschicht (75) und Hinzufügen zweier Bahnen (37) zur elektrischen Verbindung der Spule (35) an dem Rand der ersten Fläche (71), wobei die Verbindungsbahnen (37) gleich ausgerichtet sind;
- Herstellen einer Ausnehmung (16) lotrecht zum Herzen der Spule (35) auf der ersten Seite (71) und Bilden, ausgehend von einer zweiten Seite (73) der ersten Platte (31), einer durchgehende Öffnung (79) um die Spule (35) durch Ätzen, wobei zwei Aufhängearme (12) der so definierten zentralen Zone (11') zu einem umgebenden Rahmen (14'), stehen gelassen werden;
- Bilden in einer ersten Fläche (81) einer zweiten Platte (32) aus Silizium von zwei in gleicher Richtung ausgerichteten Gruppen (85) von jeweils zwei piezoresistiven Dehnungsmesseinrichtungen (41);
- Bedecken dieser Einrichtungen (41) mit einer Isolierschicht (86) und Hinzufügen von vier Bahnen (43) zur elektrischen Verbindung der Einrichtungen (41) von dem Rand der ersten Fläche (81) der ersten Platte (32), wobei die Verbindungsbahnen (43) gleich ausgerichtet sind wie die Messeinrichtungen (41);
- Herstellen, ausgehend von einer ersten Seite (84) der zweiten Platte (32), einer durchgehenden Öffnung (89) zum Begrenzen einer zentralen Zone (11''), wobei lotrecht zu jeder Gruppe (85) der Messeinrichtungen (41) ein Aufhängearm (13) dieser zentralen Zone (11'') mit einem umgebenden Rahmen (14'') stehen gelassen wird;
- Zusammensetzen der beiden Platten, indem die zweite Fläche (73) der ersten Platte (31) auf die zweite Fläche (84) der zweiten Platte (32) aufgelegt wird und die zentralen Zonen (11', 11'') der beiden zusammengesetzten Platten die bewegliche Masse (11) bilden, die an einem umgebenden Rahmen (14) aufgehängt ist, und die Aufhängearme (12) der ersten Platte (31) senkrecht zu dem Aufhängearme (13) der zweiten Platte (32) sind.

10. Verfahren zum Herstellen einer mobilen Masse (11) eines elektromagnetischen Beschleunigungsmessers nach Anspruch 9, dadurch gekennzeichnet, dass während des Ausbildens der durchgehenden Öffnungen (79, 89) in jeder der beiden Platten (31, 32) Arme (36, 42) zum provisorischen Halten von zentralen Zonen (11', 11'') stehen gelassen werden, die die Aufhängearme (12, 13) während der letzten Herstellungs- und Zusammensetzschritte entlasten sollen, wobei diese provisorischen Arme (36, 42) nach dem Zusammensetzen des Beschleunigungsmessers entfernt werden.
